Europäisches Patentamt

European Patent Office

Office européen des brevets

(11) Veröffentlichungsnummer: **0 328 914**

**A2**

# (12) EUROPÄISCHE PATENTANMELDUNG

(21) Anmeldenummer: 89101366.6

(22) Anmeldetag: 26.01.89

(51) Int. Cl.⁴: **F16K 5/04**

(30) Priorität: 11.02.88 DE 3804271

(43) Veröffentlichungstag der Anmeldung:
23.08.89 Patentblatt 89/34

(84) Benannte Vertragsstaaten:
DE ES FR GB IT

(71) Anmelder: **KRUPP POLYSIUS AG**
**Graf-Galen-Strasse 17**
**D-4720 Beckum(DE)**

(72) Erfinder: **Heinemann, Otto, Dipl.-Ing.**
**Galileistrasse 8**
**D-4722 Ennigerloh(DE)**
Erfinder: **Kornetzky, Dietrich**
**Sürlandweg 10**
**D-4740 Oelde(DE)**
Erfinder: **Thöne, Ludger, Dipl.-Ing.**
**Rote Erde 17**
**D-4740 Oelde(DE)**
Erfinder: **Golz, Hans-Joachim, Dipl.-Ing.**
**von-Staden-Strasse 3**
**D-4730 Ahlen(DE)**

(74) Vertreter: **Tetzner, Volkmar, Dr.-Ing. Dr. jur.**
**Van-Gogh-Strasse 3**
**D-8000 München 71(DE)**

(54) **Drehschieberanordnung.**

(57) Die Erfindung betrifft eine Drehschieberanordnung mit einem Schiebergehäuse, einem quer zur Gutdurchflußrichtung darin angeordneten, drehbar gelagerten Schieberrotor mit teilzylindrischem Schieberorgan, das mit einer Dichtungseinrichtung zusammenwirkt, die einen kassettenartigen rechteckigen Dichtungsrahmen mit umlaufendem Dichtungselement enthält, wobei der Dichtungsrahmen in einem im Gehäuse eingeformten Aufnahmekanal derart aufgenommen ist, daß der Dichtungsrahmen ohne Ausbau von wesentlichen Drehschieberteilen einfach und rasch eingeschoben und herausgezogen werden kann.

# Drehschieberanordnung

Die Erfindung betrifft eine Drehschieberanordnung für den geraden Durchfluß von Gut, insbesondere mehlförmigem und feinkörnigem Schüttgut, gemäß dem Oberbegriff des Patentanspruches 1.

Drehschieberanordnungen der vorausgesetzten Art sind in verschiedenen Ausführungsformen bekannt und werden sowohl als reine Absperrschieber als auch als Dosierschieber verwendet. Besonders häufig werden diese Drehschieberanordnungen unter Schüttgutsilo-Ausläufen, in Förderrohren, in pneumatischen Förderrinnen bzw. -kanälen und dergleichen eingesetzt.

Bei diesen bekannten Ausführungen ist im allgemeinen ein mehrteiliges Schiebergehäuse vorgesehen, in dem ein sich quer zur Gutdurchflußrichtung erstreckender Schieberrotor angeordnet ist, dessen Drehachse in gegenüberliegenden Gehäuseseitenwänden drehbar gelagert ist und der ein etwa teilzylindrisches Schieberorgan als eigentliches Absperr- bzw. Dosierelement für den Durchflußquerschnitt besitzt. Dieser Schieberrotor kann über seine Drehachse von Hand oder motorisch in der gewünschten Weise gedreht werden. Innerhalb des Schiebergehäuses befindet sich außerdem noch eine Dichtungseinrichtung, die mit der Außenseite des erwähnten Schieberorgans dichtend zusammenwirkt. Eine solche Dichtungseinrichtung weist üblicherweise aus metallischen oder elastischen Werkstoffen bestehende Dichtungselemente auf, die gleitend oder schleifend an den sich bewegenden Flächen des Schieberorgans dichtend anliegen sollen. Alle Dichtungselemente unterliegen daher einem mehr oder weniger großen Verschleiß und müssen somit relativ oft nachgestellt bzw. ausgetauscht werden. Bei den bekannten Drehschieberanordnungen müssen für den Austausch der Dichtungselemente Zwischenstücke (Kompensatoren oder dergleichen) ausgebaut und Dichtflansche abmontiert werden, was vielfach sehr aufwendig und umständlich ist.

Bei bekannten Drehschieberanordnungen ergeben sich ferner aufgrund der Ausführung der Dichtungseinrichtungen und Dichtungselemente wehrartige Stufen, die den Gutdurchfluß durch das Gehäuse behindern, was sich vor allem bei etwa horizontal oder leicht geneigt angeordneten Schiebergehäusen, die nach Art von pneumatischen Förderkanälen mit luftdurchlässigem Boden ausgeführt sind, als besonders nachteilig vor allem deswegen auswirkt, weil nur ein ungenügend großer Gesamtbereich des Gehäusebodens für die Beaufschlagung mit Fluidisierungsluft ausgebildet werden kann.

Der Erfindung liegt daher die Aufgabe zugrunde, eine Drehschieberanordnung der im Oberbegriff des Anspruches 1 vorausgesetzten Art zu schaffen, die bei relativ einfacher und stabiler Konstruktion ein leichtes und rasches Montieren und Demontieren der Dichtungseinrichtung gestattet und dabei auch eine gute Voraussetzung dafür bildet, ein etwa horizontal anzuordnendes, nach Art eines pneumatischen Förderkanales auszubildendes Schiebergehäuse mit einer möglichst großen luftdurchlässigen Bodenfläche auszuführen.

Diese Aufgabe wird erfindungsgemäß durch die im Kennzeichen des Anspruches 1 angegebenen Merkmale gelöst, wobei sinnvolle Ausgestaltungen und Weiterbildungen Gegenstand der Unteransprüche sind.

Da bei der erfindungsgemäßen Konstruktion die Dichtungseinrichtung im wesentlichen durch einen kassettenartigen rechteckigen Dichtungsrahmen mit darin angeordnetem, sich über die vier Rechteckseiten des Rahmens erstreckendem Dichtungselement gebildet wird und da dieser Dichtungsrahmen in einem im Schiebergehäuse eingeformten Aufnahmekanal angeordnet und gehalten ist, in den der Dichtungsrahmen als Ganzes, d.h. als Dichtungsrahmeneinheit, von außen her eingesetzt (eingeschoben) und im Bedarfsfalle wieder herausgenommen (herausgezogen) werden kann, kann das eigentliche Dichtungselement im Bedarfsfalle äußerst rasch und einfach neu eingestellt bzw. ausgewechselt werden. Bei dieser erfindungsgemäßen Ausführung können alle Rechteckseiten des Dichtungsrahmens in entsprechenden Abschnitten des Aufnahmekanals so angeordnet und gehalten sein, daß sie gegenüber dem lichten Durchflußquerschnitt des Schiebergehäuses weitgehend versenkt untergebracht sind, so daß sich optimale Durchflußverhältnisse in diesem Schiebergehäuse für das hindurchzufördernde Gut ergeben. Dies ist gleichzeitig aber auch eine gute Voraussetzung dafür, daß bei einem etwa horizontal angeordneten Schiebergehäuse dessen Boden weitgehend stufenfrei ausgeführt und mit größtmöglicher Bodenbelüftungsfläche versehen sein kann.

Die Erfindung sei nachfolgend anhand der Zeichnung näher erläutert. In dieser Zeichnung zeigen

Fig.1 eine Querschnittsansicht durch die Drehschieberanordnung, etwa entlang der Linie I-I in Fig.2;

Fig.2 eine Vertikalschnittansicht entlang der Linie II-II in Fig.1;

Fig.3 und 4 vergrößerte Detail-Schnittansichten etwa entlang der Linien III-III bzw. IV-IV in Fig.1;

Fig.5 eine Gesamtansicht des Dichtungsrahmens;

Fig.6 eine Seitenansicht des Dichtungsrahmens, etwa gemäß Pfeil VI in Fig.5;

Fig.7 eine im vergrößerten Maßstab dargestellte Detail-Schnittansicht durch den Dichtungsrahmen.

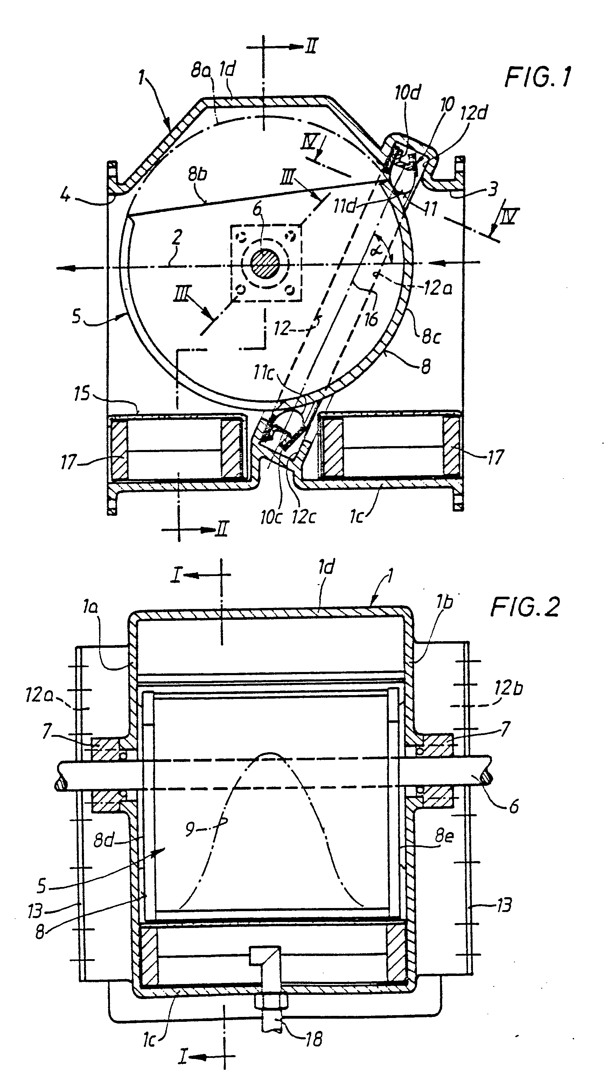

Der allgemeine Aufbau der erfindungsgemäßen Drehschieberanordnung sei zunächst anhand der Fig.1 und 2 erläutert. Diese Drehschieberanordnung ist vor allem für den geraden Durchfluß von mehlförmigem und feinkörnigem Schüttgut bestimmt.

Die Drehschieberanordnung enthält ein Schiebergehäuse 1, das - wie Fig.2 erkennen läßt - einen rechteckigen Durchflußquerschnitt besitzt, wodurch es etwa in Form eines rohrartigen Förderkanals ausgeführt ist, durch den das zu fördernde Schüttgut in Richtung der mit Richtungspfeilen versehenen strichpunktierten Linie 2 (Gutdurchflußrichtung) hindurchfließt. Das Schiebergehäuse 1 weist dabei eine Einlauföffnung 3 und eine dieser Einlauföffnung gegenüberliegende Auslauföffnung 4 auf. Zwischen diesen beiden Öffnungen 3 und 4 erstrecken sich vier den Rechteckquerschnitt begrenzende Gehäusewände, nämlich zwei sich gegenüberliegende Seitenwände 1a, 1b sowie eine Bodenwand 1c und eine Deckwand 1d, wobei das Schiebergehäuse 1 mit seinen Wänden 1a bis 1d als einstückiger, relativ einfacher Gußkörper hergestellt sein kann, der weitgehend in nur einer Werkstückaufspannung fertig bearbeitet werden kann und dessen zu bearbeitende Oberflächen nur geringe Anforderungen an die Oberflächengüte stellen. An den stirnseitigen Enden im Bereich der Einlauf- und Auslauföffnungen 3, 4 können - wie in Fig.1 angedeutet - in üblicher Weise Flansche zum Verbinden mit vor- und nachgeschalteten Förderkanälen oder dergleichen einstückig angeformt sein.

Im Schiebergehäuse 1 ist ein sich quer zur Gutdurchflußrichtung 2 erstreckender Schieberrotor 5 angeordnet, der über eine Drehachse 6 in den sich gegenüberliegenden Seitenwänden 1a und 1b in je einem Lager 7 drehbar abgestützt ist (worauf später noch näher eingegangen wird). Innerhalb des Schiebergehäuses 1 besitzt der Schieberrotor 5 ein an sich bekanntes, konzentrisch zur Drehachse 6 angeordnetes, teilzylindrisches Schieberorgan 8, das in üblicher Weise dazu dient, den Durchflußquerschnitt des Gehäuses 1 im Bedarfsfalle teilweise oder völlig abzusperren. Dieses Schieberorgan kann - wie in Fig.1 angedeutet - als teilzylindrischer Trommelkörper (Hohlkörper) oder auch als teilzylindrischer Walzenkörper (Hohlwalze oder Vollwalze) ausgebildet sein und dabei gegebenenfalls noch mit einer besonders eingeformten und in Fig.2 nur strichpunktiert angedeuteten Durchflußöffnung 9 ausgebildet sein, die insbesondere dann Verwendung findet, wenn diese Drehschieberanordnung als Dosierdrehschieber verwendet werden soll.

In Fig.1 ist noch zu erkennen, daß das Schieberorgan 8 im Durchmesser größer ist als der lichte Durchflußquerschnitt des Schiebergehäuses 1, so daß die Gehäusedeckwand 1d etwa in Anpassung an den nur strichpunktiert angedeuteten Drehkreis 8a des Schieberorgans 8 nach oben erweitert (ausgebaucht) ist. Bezüglich der teilzylindrischen Ausbildung des Schieberorgans 8 sei erwähnt, daß diese Ausbildung sich in üblicher Weise dadurch ergibt, daß von einem gedachten Vollzylinder ein - bezogen auf den Kreisquerschnitt - Segmentteil abgeschnitten ist, so daß sich eine Art Sehnenfläche 8b entsprechend Fig.1 ergibt, worauf später nochmals eingegangen wird.

Betrachtet man die Darstellung in Fig.1, dann ist im Schiebergehäuse 1 noch eine Dichtungseinrichtung vorgesehen, die im wesentlichen durch einen Dichtungsrahmen 10 gebildet wird. Diese Dichtungseinrichtung wirkt mit der Außenseite, und zwar sowohl mit der Außenumfangsseite als auch mit den geschlossenen Stirnseiten des Schieberorgans 8 zur Erzielung einer ausreichenden Abdichtung gegenüber einem Materialdurchfluß zusammen, wobei dieser Dichtungsrahmen 10 mit der jeweils der Einlauföffnung 3 zugewandten Außenumfangsseite des Schieberorgans 8 zusammenwirkt.

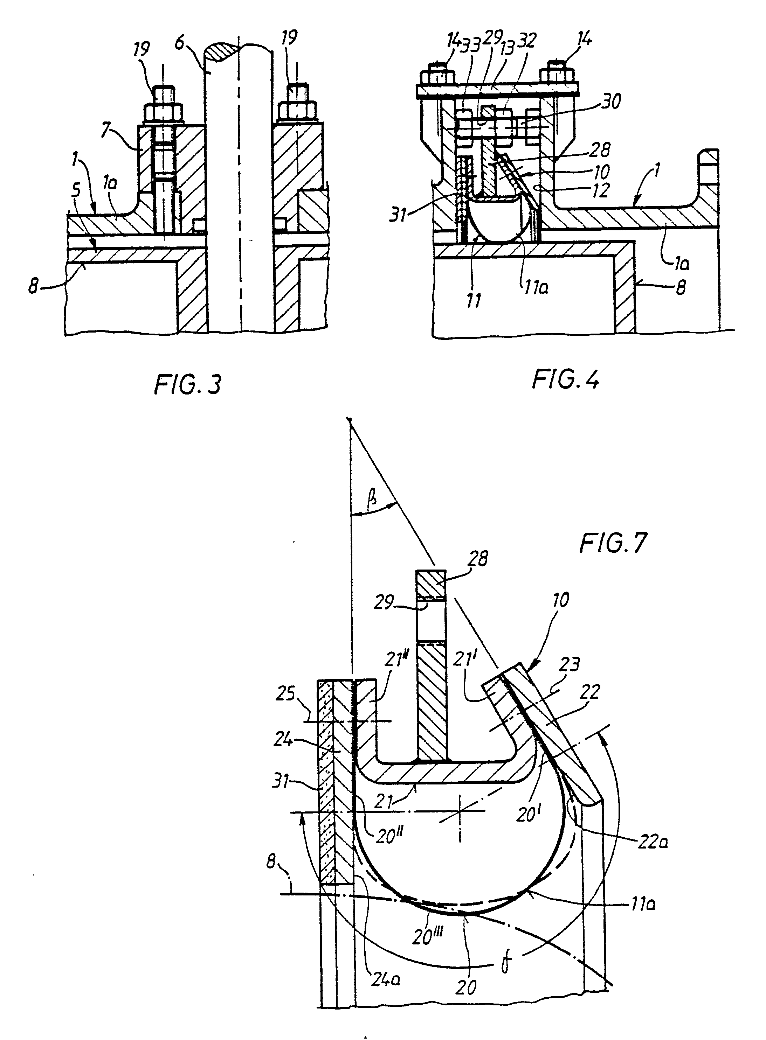

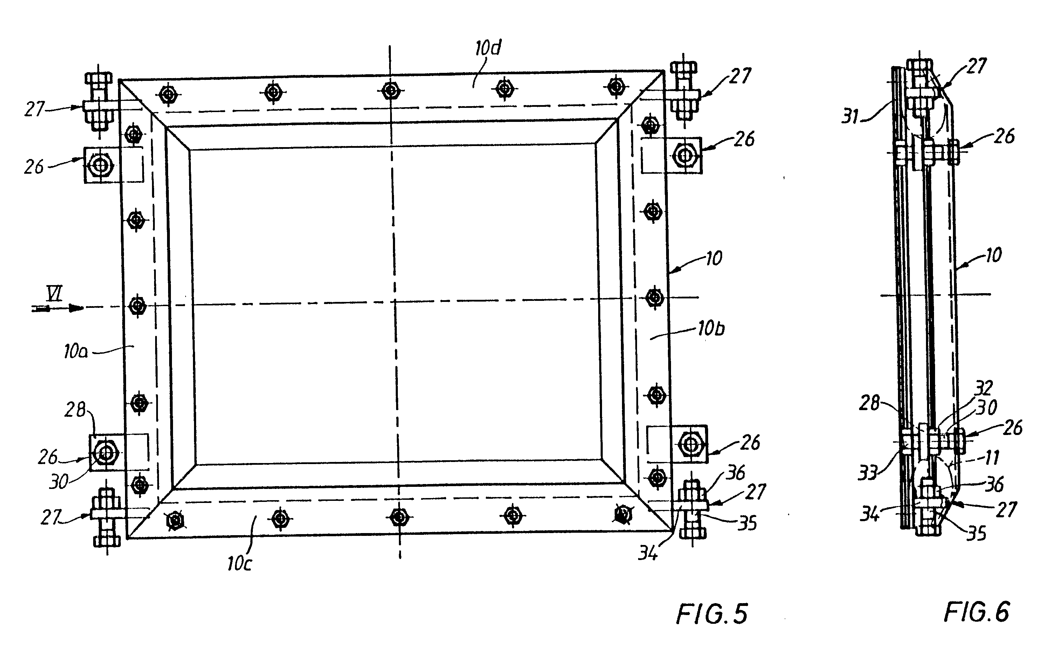

Wie anhand der Fig.4 bis 6 später noch näher erläutert wird, ist der Dichtungsrahmen 10 kassettenartig und rechteckig (vgl. Fig.5) ausgeführt. Er ist mit einem sich über seine vier Rechteckseiten 10a, 10b, 10c und 10d erstreckenden Dichtungselement 11 versehen, das mit der teilzylindrischen Außenumfangsseite 8c und den Stirnseiten 8d und 8e des Schieberorgans 8 federelastisch in Eingriff steht bzw. in Eingriff gebracht werden kann.

In den vier Schiebergehäusewänden 1a bis 1d ist ein über den Umfang des Gehäuses 1 umlaufender, zum Gehäuseinnern offener Aufnahmekanal 12 zur Aufnahme des Dichtungsrahmens 10 eingeformt. Dieser Aufnahmekanal 12 setzt sich dabei aus vier jeweils unmittelbar aneinander anschließenden Aufnahmekanalabschnitten 12a bis 12d zusammen, von denen sich je einer in einer der vier Gehäusewände 1a bis 1d befindet. Während beim veranschaulichten Ausführungsbeispiel die beiden in der Bodenwand 1c und in der Deckwand 1d eingeformten Aufnahmekanalabschnitte 12c und 12d einen etwa U-förmigen Querschnitt (vgl. Fig.1) besitzen, der vollkommen durch den Gußkörper des Schiebergehäuses 1 (einstückig) gebildet ist, weisen die beiden Aufnahmekanal-Abschnitte 12a und 12b in den beiden sich gegenüberliegenden Gehäuseseitenwänden 1a und 1b an der Gehäuseaußenseite lösbar befestigte Bodenplatten 13 (vgl. Fig.2 und 4) auf, so daß sich in diesen beiden Gehäuseseitenwänden 1a und 1b durch die Aufnahmekanalabschnitte 12a und 12b jeweils ein von außen her zugänglicher Gehäuseschlitz ergibt, und zwar in der Weise, daß der Dichtungsrahmen 10 als ganze Einheit von außen her in den Aufnahmekanal 12 eingesetzt (eingeschoben) oder herausgenommen (herausgezogen) werden kann, wodurch sich sowohl Montage und Demontage des Dichtungsrahmens 10 als auch - im Bedarfsfalle - ein Auswechseln dieses Dichtungsrahmens, insbesondere seines Dichtungselements 11, äußerst rasch und einfach durchführen lassen. Die genannten Bodenplatten 13 zum äußeren Abschluß der beiden sich gegenüberliegenden Aufnahmekanalabschnitte 12a und 12b können, wie in Fig.4 bei 14 angedeutet ist, durch Schrauben und Muttern lösbar befestigt sein.

Was die Anordnung des Dichtungsrahmens 10 (und damit auch die Ausbildung des Aufnahmekanals 12) im Schiebergehäuse 1 anbelangt, so könnte dies grundsätzlich in jeder geeigneten Weise erfolgen, beispielsweise könnte der Dichtungsrahmen 10 etwa vertikal in jeder geeigneten Zuordnung zum Schieberorgan 8 angeordnet werden oder auch in jeder geeigneten Weise schräg zur Gutdurchflußrichtung 2. Dabei müßte jedoch bei etwa ebener Ausbildung des Dichtungsrahmens meist eine etwa wehrartige Abstufung im Bereich des Schiebergehäusebodens vor dem Schieberorgan 8 in Kauf genommen werden, wodurch dann der Gutdurchfluß behindert wird.

Bei dem in den Fig.1 und 2 veranschaulichten Ausführungsbeispiel sei - wie zum Teil erwähnt -angenommen, daß das Schiebergehäuse 1 in Form eines etwa horizontal verlaufenden pneumatischen Förderkanales mit luftdurchlässigem Boden (Belüftungsboden 15) ausgeführt ist. Der Dichtungsrahmen 10 mit seinem Dichtungselement 11 bildet eine im wesentlichen parallel zur Drehachse 6 des Schieberrotors 5 verlaufende Dichtungsebene 16 (vgl. Fig.1), die im wesentlichen durch die Berührungslinien beim Dichtungseingriff zwischen dem Dichtungselement 11 und dem Schieberorgan 8 bestimmt wird. Es wird bei diesem Ausführungsbeispiel vorgezogen, den Dichtungsrahmen 10 im Schiebergehäuse 1 in der aus Fig.1 ersichtlichen Weise derart schräg anzuordnen, daß die genannte Dichtungsebene 16 mit der - im wesentlichen horizontal verlaufenden - Durchflußrichtung 2 einen spitzen Winkel α einschließt. Diese Schrägstellung ist dabei so gewählt, daß die obere Rechteckseite 10d des Dichtungsrahmens 10 in ihrem zugehörigen Aufnahmekanalabschnitt 12d so aufgenommen ist, daß der dort vorhandene Längsabschnitt 11d des Dichtungselements 11 nahezu in der Ebene der Innenseite der Gehäusedeckwand 1d im Bereich der Einlauföffnung 3 liegt, während die im unteren Aufnahmekanalabschnitt 12c aufgenommene untere Rechteckseite 10c des Dichtungsrahmens 10 sich etwa im Bereich unterhalb der Schieberrotor-Drehachse 6 befindet, wobei die elastisch verformbare Dichtungseingriffsfläche vom unteren Dichtungselement-Längsabschnitt 11c etwa in der Ebene der Innenseite der Gehäusebodenwand 1c oder geringfügig darüber liegt, d.h. im veranschaulichten Ausführungsbeispiel wird die genannte Ebene der Innenseite der Gehäusebodenwand 1c durch den Belüftungsboden 15 bestimmt. Bei Betrachtung der Fig.1 schließen sich - in Gutdurchflußrichtung 2 betrachtet - zu beiden Seiten der unteren Dichtungsrahmen-Rechteckseite 10c Belüftungskästen 17 unmittelbar an, die die Innenseite der Gehäusebodenwand 1c bilden und in an sich bekannter Weise über Rohrstutzen 18 an ein Belüftungsleitungssystem angeschlossen sind. Diese Schräganordnung des Dichtungsrahmens 10 im Schiebergehäuse 1 gestattet einen optimalen Gutdurchfluß, wobei die Innenseite der Gehäusebodenwand 1c, d.h. der Belüftungsboden 15 der Belüftungskästen 17 praktisch frei ist von jeglicher wehrartiger Abstufung.

Die erläuterte Schrägstellung des Dichtungsrahmens 10 paßt im übrigen auch zusammen mit der Querschnittsausbildung des Schieberorgans 8, d.h. die Sehne bzw. Sehnenfläche 8b des Schieberorgans 8 ist so gewählt, daß sie in der entsprechenden Drehstellung des Schieberorgans 8 parallel zu der Dichtungsebene 16 bzw. der ihr zugewandten Schieberrahmenfläche verläuft und in dieser Stellung ein ungehindertes Montieren und Demontieren des Dichtungsrahmens 10 gestattet, ohne daß dazu das Schieberorgan 8 bzw. der ganze Schieberrotor 5 ausgebaut werden müßte.

In Fig.3 ist eine Möglichkeit veranschaulicht, wie die Enden von der Drehachse 6 des Schieberrotors 5 in den Seitenwänden 1a bzw. 1b des Schiebergehäuses 1 drehbar gelagert sein können. Bei der Drehachse 6 kann es sich um eine solche handeln, die von einer durchgehenden Welle oder auch nur von Achsstummeln gebildet ist. Die für die drehbare Abstützung der beiden Achsenden dieser Drehachse 6 vorgesehenen Lager 7 sind vorzugsweise - wie an sich bekannt - als armierte Kunststofflager ausgeführt, die mittels Schrauben 19 lösbar an den zugehörigen Seitenwänden 1a, 1b des Schiebergehäuses 1 befestigt sind. Diese Kunststofflager 7 können bei auftretendem Verschleiß in bekannter Weise dadurch nachgestellt und in eine andere Beanspruchungslage gedreht werden, daß im Bedarfsfalle ihre Befestigungsschrauben 19 etwas gelöst werden und sie dadurch etwas um die Drehachse 6 verdreht werden.

Eine besondere Bedeutung wird auch der Ausbildung des Dichtungselements 11 vom Dichtungsrahmen 10 zugemessen. Obwohl dieses Dichtungselement grundsätzlich aus jedem geeigneten Dichtungsmaterial und in jeder geeigneten Form hergestellt sein könnte, wird es jedoch vorgezogen, daß dieses Dichtungselement 11 - wie bereits weiter oben angedeutet - in den Rechteckseiten 10a bis 10d des Dichtungsrahmens 10 angepaßte Längsabschnitte 11a bis 11d unterteilt ist und daß dabei jeder dieser Längsabschnitte 11a bis 11d - wie in Fig.7 veranschaulicht - aus einem im Querschnitt etwa U-förmig gebogenen Federstahlstreifen besteht. Alle Federelement-Längsabschnitte 11a bis 11d sind grundsätzlich gleichartig aufgebaut und können sich lediglich in ihrer Länge unterscheiden, so daß anhand der Fig.7 nur der Aufbau des Längsabschnittes 11a erläutert wird.

Die Schenkel des U-förmig gebogenen Federstahlstreifens 20 sind an ihren freien Enden 20′, 20″ fest eingespannt. Das Schenkelende 20′ ist zwischen dem Steg 21′ eines Halteprofiles 21 und einem leistenförmigen äußeren Spannelement 22 mittels einer nur angedeuteten Verschraubung 23 eingespannt, während das andere Schenkelende 20″ des Federstahlstreifens 20 zwischen einem zweiten Steg 21″ des Halteprofils 21 und einem zweiten leistenartigen äußeren Spannelement 24 mittels einer Verschraubung 25 eingespannt ist. Das Halteprofil 21 und die beiden äußeren Spannelemente 22, 24 sind Teile des Dichtungsrahmens 10.

Die beiden Stege 21′, 21″ des Halteprofils 21 sind so abgebogen, daß sie miteinander einen spitzen Winkel β einschließen, der etwa 15 bis 45° betragen kann (im dargestellten Ausführungsbeispiel etwa 30°), wodurch sich für den Federstahlstreifen 20 (als eigentliches Dichtungselement) ein Einspannwinkel γ zwischen 200 und 225° (im dargestellten Ausführungsbeispiel von etwa 210°) ergibt.

Die beiden äußeren Spannelemente 22 und 24 sind über die Einspannzonen, d.h. über die Länge der Stege 21′, 21″ des Halteprofils 21 hinaus in Richtung auf den freiliegenden mittleren Teil des Federstahlstreifens 20 verlängert und bilden hier Abrollflächen 22a, 24a, die tangential zu den eingespannten Enden 20′, 20″ des Federstahlstreifens 20 verlaufen. Etwa in dem genannten mittleren Bereich zwischen den beiden Einspannstellen kommt der Federstahlstreifen 20 mit dem abzudichtenden Schieberorgan 8 (in Fig.7 nur strichpunktiert angedeutet) in Berührung und wird dabei in der gestrichelt angedeuteten Weise verformt. Wird die mittlere Zone 20‴ des Federstahlstreifens 20 nach innen (in Richtung auf das Halteprofil 21) gedrückt, so legt sich der Federstahlstreifen 20 mit den an die eingespannten Enden 20′, 20″ angrenzenden Zonen an die genannten Abrollflächen 22a, 24a an. Diese Abrollflächen begrenzen somit die Verformbarkeit der beiden Schenkel des Federstahlstreifens 20 nach außen hin und verhindern dessen Abknicken.

Das in der zuvor geschilderten Weise ausgebildete Dichtungselement 11 des Dichtungsrahmens 10 ist somit in seiner metallisch-elastischen Ausführung selbstnachstellend und äußerst wenig verschleißanfällig.

Bezüglich des Dichtungsrahmens sei noch auf eine weitere Besonderheit hingewiesen. Danach weist dieser Dichtungsrahmen 10 an den beiden Rechteckseiten 10a und 10b, denen die mit lösba- ren Bodenplatten 13 versehenen Aufnahmekanalab- schnitte 12a, 12b zugeordnet sind, auf seinem Außenumfang verschiedene Einrichtungen 26, 27 zum Ausrichten und Festklemmen des Dichtungselements 11 und des Dichtungsrahmens 10 im Aufnahmekanal 12 auf. Diese Einrichtungen 26, 27 sind vorzugsweise in der Nähe der Dichtungsrahmenecken an den genannten Rechteckseiten 10a und 10b angeordnet, wie es in den Fig.5 und 6 im einzelnen veranschaulicht ist.

Danach besitzt jede Einrichtung 26 eine am Dichtungsrahmen 10 angeschweißte, etwa rechtwinklig vorstehende Lasche 28, die - vgl. auch Fig.4 und 7 - eine durchgehende Gewindebohrung 29 aufweist, in der eine Einstellschraube 30 angeordnet ist. Durch ein Drehen dieser Einstellschraube 30 kann der Dichtungsrahmen 10 im Aufnahmekanal 12 in der in Fig.4 dargestellten Weise festgeklemmt werden. Hierbei wird gleichzeitig eine auf der einen Außenseite des Dichtungsrahmens 10 und im Montagezustand zwischen diesem Dichtungsrahmen und dem Aufnahmekanal 12 vorgesehene elastische Dichtung 31, die vorzugsweise aus Silikonschaum-Dichtungsstreifen gebildet ist, abdichtend zusammengedrückt werden, so daß dadurch eine zuverlässige Abdichtung zwischen dem Dichtungsrahmen 10 und dem Schiebergehäuse 1 gebildet ist. Die Einstellschraube 30 kann ferner mit Hilfe einer Kontermutter 32 in ihrer Einstellage festgelegt werden. Die Fixierung des kassettenartigen Dichtungsrahmens im Aufnahmekanal 12 erfolgt ferner mit Hilfe einer weiteren Kontermutter 33, die sich gegen die entsprechende Innenseite des Aufnahmekanals 12 anlegt.

Auch jede Einrichtung 27 ist über eine etwa rechtwinklig vom Dichtungsrahmen 10 vorstehende Lasche 34 an diesem Dichtungsrahmen befestigt, wobei diese Laschen 34 jedoch rechtwinklig zu den ersten Laschen 28 der Einrichtungen 26 ausgerichtet sind. Diese Einrichtungen 27 dienen in der Hauptsache zum Ausrichten des Dichtungsrahmens 10 mit seinem Dichtungselement 11 gegen über dem Schieberorgan 8 des Schieberrotors 5. Jede Ausrichteinrichtung 27 enthält dabei ebenfalls eine Einstellschraube 35, die mit Hilfe einer Kontermutter 36 festgestellt werden kann.

Während die Drehschieberanordnung anhand der Zeichnung vor allem in einer Ausführung erläutert worden ist, bei der das Schiebergehäuse etwa horizontal verläuft und nach Art eines pneumatischen Förderkanales bzw. einer pneumatischen Förderrinne ausgeführt ist, ist es generell auch möglich, diese Drehschieberanordnung mehr oder weniger stark geneigt oder im Bedarfsfalle auch etwa senkrecht, d.h. mit mehr oder weniger stark geneigtem bzw. etwa senkrechtem Gutdurchfluß, zum Montieren, beispielsweise in irgendeiner Förderleitung oder auch unterhalb eines Behälterauslaufes.

## Ansprüche

1. Drehschieberanordnung für den geraden Durchfluß von Gut, insbesondere mehlförmigem und feinkörnigem Schüttgut, enthaltend
a) ein Schiebergehäuse (1) mit rechteckigem Durchflußquerschnitt sowie mit einer Einlauföffnung (3) und einer dieser gegenüberliegenden Auslauföffnung (4),
b) einen im Schiebergehäuse (1) angeordneten, sich quer zur Gutdurchflußrichtung (2) erstreckenden Schieberrotor (5), der über eine Drehachse (6) in gegenüberliegenden Gehäusewänden (1a, 1b) drehbar gelagert ist und der ein konzentrisch zur Drehachse angeordnetes, teilzylindrisches Schieberorgan (8) zum teilweisen oder völligen Absperren des Durchflußquerschnittes vom Gehäuse (1) aufweist,
c) eine im Schiebergehäuse (1) auswechselbar vorgesehene, mit der Außenseite des Schieberorgans (8) zusammenwirkende Dichtungseinrichtung (10), gekennzeichnet durch folgende Merkmale:
d) die Dichtungseinrichtung enthält einen kassettenartigen rechteckigen Dichtungsrahmen (10) mit einem sich über die vier Rechteckseiten (10a bis 10d) des Rahmens erstreckenden Dichtungselement (11), das mit der teilzylindrischen Außenumfangsseite (8c) und den Stirnseiten (8d, 8e) des Schieberorgans (8) federelastisch in Eingriff bringbar ist;
e) in die vier Schiebergehäusewände (1a bis 1d) ist ein über den Umfang des Gehäuses (1) umlaufender, zum Gehäuseinnern offener Aufnahmekanal (12) zur Aufnahme des Dichtungsrahmens (10) eingeformt;
f) die beiden Aufnahmekanal-Abschnitte (12a und 12b) in zwei sich gegenüberliegenden Schiebergehäusewänden (1a, 1b) weisen an der Gehäuseaußenseite lösbar befestigte Bodenplatten (13) in der Weise auf, daß der Dichtungsrahmen (10) als Ganzes von der Außenseite her einsetzbar und herausnehmbar ist.

2. Drehschieberanordnung nach Anspruch 1, dadurch gekennzeichnet, daß der Dichtungsrahmen (10) an den beiden Rechteckseiten (10a, 10b), denen die mit lösbaren Bodenplatten (13) versehenen Aufnahmekanal-Abschnitte (12a, 12b) zugeordnet sind, auf seinem Außenumfang Einrichtungen (26, 27) zum Einstellen und Festklemmen sowie zum Ausrichten des Dichtungsrahmens (10) mit Dichtungselement (11) im Aufnahmekanal (12) aufweist.

3. Drehschieberanordnung nach Anspruch 2, dadurch gekennzeichnet, daß die Einstell- und Festklemm- sowie Ausrichteinrichtungen (26, 27) durch kombinierte Einstell- und Festklemmschrauben (30, 32, 33; 35, 36) gebildet sind.

4. Drehschieberanordnung nach Anspruch 2, dadurch gekennzeichnet, daß zwischen dem Dichtungsrahmen (10) und dem Aufnahmekanal (12) eine elastische Dichtung (31), vorzugsweise in Form von Silikonschaum-Dichtungsstreifen, vorgesehen ist.

5. Drehschieberanordnung nach Anspruch 1, dadurch gekennzeichnet, daß das Dichtungselement (11) in den Rechteckseiten (10a bis 10d) des Dichtungsrahmens (10) angepaßte Längsabschnitte (11a bis 11d) unterteilt ist, die aus einem im Querschnitt etwa U-förmig gebogenen Federstahlstreifen (20) bestehen, der an den freien Enden (20', 20'') der beiden Schenkel des U im Dichtungsrahmen (10) eingespannt und an seinem mittleren Bereich (20''') zwischen den beiden Einspannstellen mit der ihm zugewandten Fläche des Schieberorgans (8) in Dichtungseingriff bringbar ist.

6. Drehschieberanordnung nach Anspruch 1, dadurch gekennzeichnet, daß der Dichtungsrahmen (10) mit seinem Dichtungselement (11) eine im wesentlichen parallel zur Drehachse (6) des Schieberrotors (5) verlaufende Dichtungsebene (16) bildet und im Schiebergehäuse (1) derart schräg angeordnet ist, daß diese Dichtungsebene (16) mit der Gutdurchflußrichtung (2) einen spitzen Winkel ($\alpha$) einschließt.

7. Drehschieberanordnung nach Anspruch 6, wobei das Schiebergehäuse in Form eines rohrartigen, etwa horizontal verlaufenden pneumatischen Förderkanales mit luftdurchlässigem Boden ausgeführt ist, dadurch gekennzeichnet, daß die im Aufnahmekanalabschnitt (12c) der Gehäusebodenwand (1c) aufgenommene untere Rechteckseite (10c) des Dichtungsrahmens (10) sich etwa im Bereich unterhalb der Schieberrotor-Drehachse (6) befindet und die elastisch verformbare Dichtungseingriffsfläche des Dichtungselements (11) etwa in der Ebene der Innenseite (15) der Gehäusebodenwand oder geringfügig darüber liegt, wobei sich - in Gutdurchflußrichtung (2) betrachtet - zu beiden Seiten der unteren Dichtungsrahmen-Rechteckseite (10c) Belüftungskästen (17) unmittelbar anschließen, die die Innenseite der Gehäusebodenwand bilden.

8. Drehschieberanordnung nach Anspruch 1, dadurch gekennzeichnet, daß das Drehschiebergehäuse (1) mit seinen Wänden (la bis 1d) und den darin eingeformten Aufnahmekanalabschnitten (12a bis 12d) als einstückiger Gußkörper hergestellt ist.

9. Drehschieberanordnung nach Anspruch 8, dadurch gekennzeichnet, daß an zwei einander gegenüberliegenden Seitenwänden (la, 1b) des Schiebergehäuses (1) bei Verschleiß nachstellbare, armierte Kunststofflager (7) für die drehbare Abstützung der beiden Achsenden der Drehachse (6) lösbar angebracht sind.

FIG.1

FIG.2

FIG. 3

FIG. 4

FIG. 7

FIG.5                    FIG.6

EP 0 328 914 A2